# EUROPEAN PATENT APPLICATION

(11) **EP 2 061 236 A1**
(43) Date of publication of application: **20.05.2009**
(21) Application number: 08168959.8
(22) Date of filing: 12.11.2008
(51) Int. Cl.: H04N 5/44

(54) **Image processing apparatus and control method thereof**

(30) Priority: 14.11.2007 KR 20070116234
(71) Applicant: Samsung Electronics Co., Ltd., Suwon-si, Gyeonggi-Do (KR)
(72) Inventor: Yang, Deok-jin, Yeongtong-dong Yeongtong-gu Suwon-si Gyeonggi-do (KR)
(74) Representative: Walaski, Jan Filip

(57) **Abstract**

An image processing apparatus includes: an image processor which processes an inputted image to be displayed without a resolution change; and a controller which detects a distortion region of the displayed image and controls the image processor to compensate for at least a part of the detected distortion region based on a peripheral colour.

## Description

The present invention relates to an image processing apparatus and a control method thereof, and more particularly, to an image processing apparatus which compensates for a distortion region of a displayed image, and a control method thereof.

With advances in image technology, an image processing apparatus such as a TV and a set-top box receives 16:9 wide images as well as 4:3 images. Meanwhile, an image display apparatus such as a TV has a fixed aspect ratio such as 4:3 or 16:9. Thus, the image processing apparatus may scale a received image to change various aspect ratios of received images into the fixed aspect ratio.

More specifically, the image processing apparatus uses a letter box method to reduce a 16:9 image signal according to a 4:3 aspect ratio or uses a pillar box method which changes a 4:3 image signal into a 16:9 aspect ratio while maintaining a height of the image.

However, if the image is scaled according to the aspect ratio of the image processing apparatus, the image quality may be lowered and a pair of black bars is formed on a top and a bottom or in the left and right of the screen. Thus, the image becomes smaller than the actual screen.

Recently, a full HD TV mainly one-to-one scans an input image and displays the image without an additional scaling (hereinafter, called Justscan scanning).
The image which is displayed by the Justscan scanning does not change in resolution and provides a user with highest picture quality. Meanwhile, a distortion region is formed in black from an external circumference of the image.

Thus, overscan is performed not to display the distortion region in the circumference of the image, which means the resolution of the image is changed and the image quality is lowered. Also, the Justscan scanning of the full HD TV is not effective.

Accordingly, it is an aspect of the present invention to provide an image processing apparatus which compensates for a distortion region of an external circumference of an image displayed by Justscan scanning and provides a clear image in high resolution, and a control method thereof.

Additional aspects and/or advantages of the present invention will be set forth in part in the description which follows and, in part, will be obvious from the description, or may be learned by practice of the present invention.

The foregoing and/or other aspects of the present invention are also achieved by providing an image processing apparatus, comprising: an image processor which processes an input image to be displayed without a resolution change; and a controller which detects a distortion region of the displayed image and controls the image processor to compensate for at least a part of the detected distortion region based on a peripheral colour. In other words, the compensation is based on the image colour in a region adjacent to the distortion region, so as to provide a clean and undistorted border between the image and the edge region of the display.

A width of the distortion region may comprise a predetermined number of pixels from an external circumference of the image to the inside.

The controller may determine that a pixel of the image is included in the distortion region if the pixel of the image is black.

The image processor may further comprise an OSD (on screen display) generator to generate an OSD having a width corresponding to a predetermined number of pixels along the external circumference of the image, and the controller may control the OSD generator to replace the distortion region with the OSD.

A width of the replaced OSD may correspond to a maximum value of the pixels in the distortion region.

The image processing apparatus may further comprise a display unit which displays the image thereon.

The image processing apparatus may further comprise a user input unit which receives a user's command, wherein the controller controls the image processor to selectively compensate for the distortion region according to the user's command input through the user input unit.

The foregoing and/or other aspects of the present invention are also achieved by providing a control method of an image processing apparatus which displays an input image without a resolution change, the control method comprising: detecting a distortion region of the displayed image; and compensating for at least a part of the detected distortion region based on a peripheral colour.

A width of the distortion region may comprise a predetermined number of pixels from an external circumference of the image to the inside.

The detecting the distortion region may comprise determining that a pixel of the image is included in the distortion region if the pixel of the image is black.

The control method may further comprise generating an OSD (on screen display) having a width corresponding to a predetermined number of pixels along the external circumference of the image, wherein the compensating for the at least a part of the distortion region comprises replacing the distortion region with the OSD.

A width of the replaced OSD may correspond to a maximum value of the pixels in the distortion region.

The control method may further comprise displaying the image.

The control method may further comprise receiving a user's command, wherein the compensating for the at least a part of the distortion region comprises selectively compensating for the at least a part of the distortion region according to the input user's command.

The above and/or other aspects of the present invention will become apparent and more readily appreciated from the following description of the embodiments, taken in conjunction with the accompanying drawings of which:
FIG. 1 is a block diagram of an image processing apparatus according to an exemplary embodiment of the present invention;
FIG. 2 illustrates an image before it is compensated for according to the exemplary embodiment of the present invention;
FIG. 3 illustrates an image after it is compensated for according to the exemplary embodiment of the present invention; and
FIGS. 4 and 5 are flowcharts to describe a control method of the image processing apparatus according to the exemplary embodiments of the present invention.

Hereinafter, exemplary embodiments of the present invention will be described with reference to the accompanying drawings, wherein like numerals refer to like elements and repetitive descriptions will be avoided as necessary.

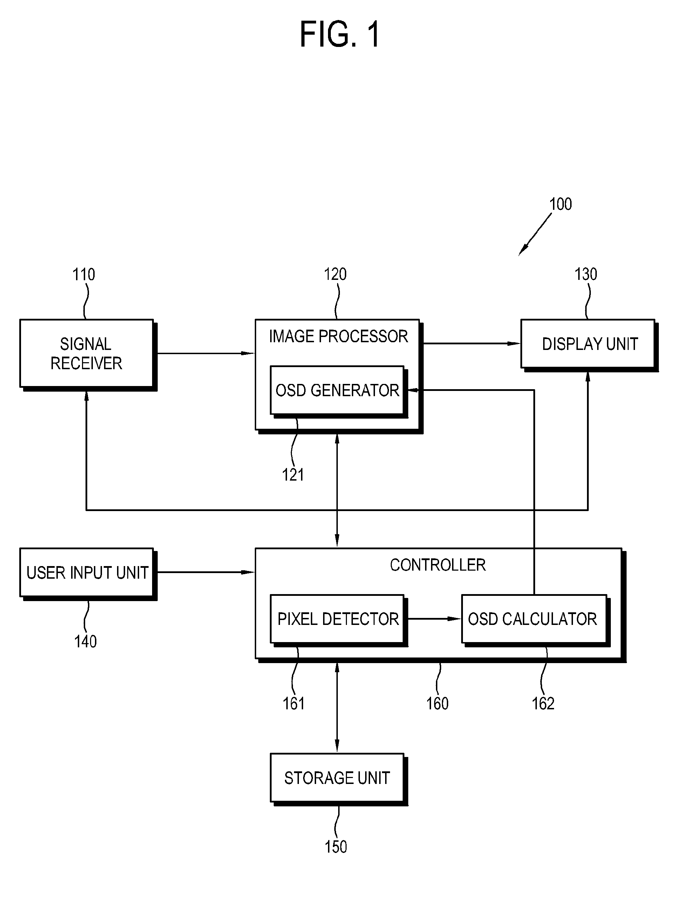

FIG. 1 is a block diagram of an image processing apparatus 100 according to an exemplary embodiment of the present invention. The image processing apparatus 100 according to the present embodiment may include a digital TV, a set-top box, etc. The image processing apparatus 100 may include a full HD TV which employs Justscan one-to-one scanning and displays an input image signal without an additional scaling process.

As shown therein, the image processing apparatus 100 includes a signal receiver 110, an image processor 120, a display unit 130, a user input unit 140, a storage unit 150 and a controller 160.

The signal receiver 110 receives an image signal from the outside. The input image signal may include all signals input by various external sources such as a DVD player, as well as a broadcasting signal. The input image signal may include a wide image signal having a 16:9 aspect ratio.

The signal receiver 110 includes an antenna to receive a broadcasting signal and a tuner to tune a broadcasting signal of a particular channel selected by a user. The signal receiver 110 may include a CVBS (composite video baseband signal) terminal, an S-video terminal, a component terminal, a PC-signal terminal, a DVI (digital video/visual interactive) terminal, an HDMI (high definition multimedia interface) terminal, etc. to receive an image signal from various external sources.

The image processor 120 processes the image signal input by the signal receiver 110 into a format displayable on the display unit 130.

The image processor 120 according to the present invention may process an input image signal (e.g. 16:9 wide image signal) with Justscan one-to-one scanning the image signal without a change in resolution.

The image processor 120 according to the exemplary embodiment of the present invention may include a video decoder, an A/D converter, a Transition Minimized Differential Signaling (TMDS) receiver, etc. The video decoder decodes an analog video signal, e.g. a composite video baseband signal (CVBS) or an S-video signal input by an analog connecter and outputs the video signal. The A/D converter converts an input analog video signal such as a component signal or a PC signal into a digital video signal and outputs the digital video signal. The TMDS receiver divides a digital video signal such as a DVI signal input from the outside through the signal receiver 110, into an RGB digital signal and a H/V synchronous signal, and outputs the signals.

As shown in FIG. 1, the image processor 120 further includes an on screen display (OSD) generator 121 which generates an OSD according to a control of the controller 160 (to be described below). The OSD generator 121 generates an OSD having a width by using OSD data calculated by an OSD calculator 162 (to be described below). In an exemplary embodiment, the width of the OSD may be predetermined. The image processor 120 mixes an OSD signal of the OSD output by the OSD generator 121 with the image signal and outputs the mixed signal to the display unit 130. The width of the generated OSD may correspond to a number of pixels along the external circumference, or periphery, of the image and a maximum pixel width of the pixels in a distortion region of the image signal. In an exemplary embodiment, the number of pixels along the external circumference may be predetermined. The display unit 130 displays the image processed by the image processor 120. The image displayed on the display unit 130 may be one-to-one scanned by the Justscan scanning and output without a change in resolution.

The display unit 130 includes a display panel (not shown) to display an image thereon and a panel driver (not shown) to process the image signal received from the image processor 120 and to display it on the display panel. The display panel according to the present invention may include a liquid crystal display (LCD) panel or a plasma display panel (PDP).

The user input unit 140 includes a user interface (UI) to receive a user's command. The user input unit 140 receives a user's selection to compensate for the distortion region of the image signal.

The user input unit 140 includes at least one button that is a hot key. The user input unit 140 may be embodied as a remote controller or a control panel provided in the image processing apparatus 100. If a button of the remote controller or the control panel is pressed, the controller 160 may determine that the user's command is input. For example, the controller 160 may generate a compensation menu to perform the Justscan scanning corresponding to the user's command input through the user input unit 140, display the menu on the display unit 130 and receive a user's selection corresponding to the displayed menu.

The storage unit 150 stores therein an image signal input from the outside. The storage unit 150 may include a flash memory, an HDD, etc.

The controller 160 controls the image processing apparatus 100 as a whole. More specifically, the controller 160 detects a distortion region of a displayed image signal, and controls the image processor 120 to compensate for at least a part of the detected distortion region based on peripheral colour. The controller 160 may include a software program and a processor such as a microcomputer and a CPU to load and execute the program. As shown in FIG. 1, the controller 160 according to the exemplary embodiment of the present invention may include a pixel detector 161 and the OSD calculator 162.

The pixel detector 161 detects a pixel value corresponding to each pixel of the image signal input through the signal receiver 110 and stored in the storage unit 150.

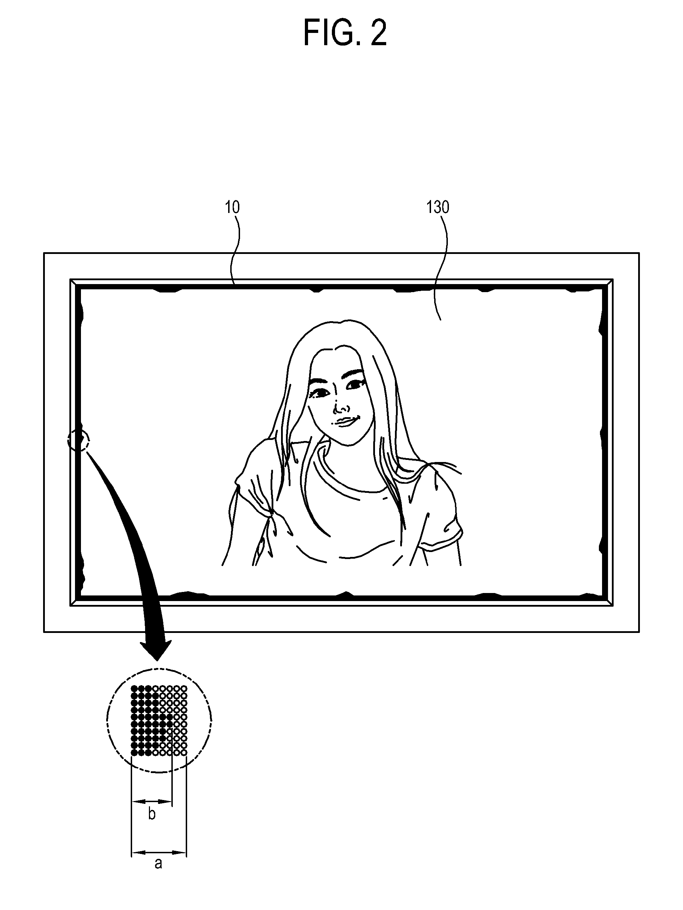

More specifically, the pixel detector 161 detects a brightness of each pixel with a waveform indicating the size of the image signal displayable on the display unit 130. The pixel detector 161 may detect a pixel corresponding to a black colour having a large value among the pixels of the image signal. As shown in FIG. 2, a pixel in a region 10 having a pixel value corresponding to a black colour is a distortion region (also known as black region or garbage region) of the image signal.

The pixel detector 161 according to the present invention may determine that a particular pixel is black if the detected pixel value, i.e., the brightness, has a certain value and above, and determine that the concerned pixel is included in the distortion region. The certain value may be predetermined.

Referring to FIG. 2, the distortion region mostly exists in the region 10 adjacent to the external circumference of the displayed image. As shown in FIG. 2, the pixel detector 161 may detect the distortion region in a region that is a pixels (e.g., eight pixels) from the external circumference of the image signal. In an exemplary embodiment, a may be predetermined.

The controller 160 calculates compensation data with the pixel value included in the distortion region detected by the pixel detector 161, based on the peripheral colour.

More specifically, the controller 160 replaces a pixel value of the pixel included in the distortion region with a colour similar to the colour of an adjacent pixel not included in the distortion region. Here, the controller 160 may sequentially compensate for the pixel value, i.e., replace some of the black pixel values in the distortion region, with a colour similar to the colour of the adjacent pixel, from the inside to the outside of the image.

The calculated compensation data is received by the image processor 120 and output to the display unit 130.

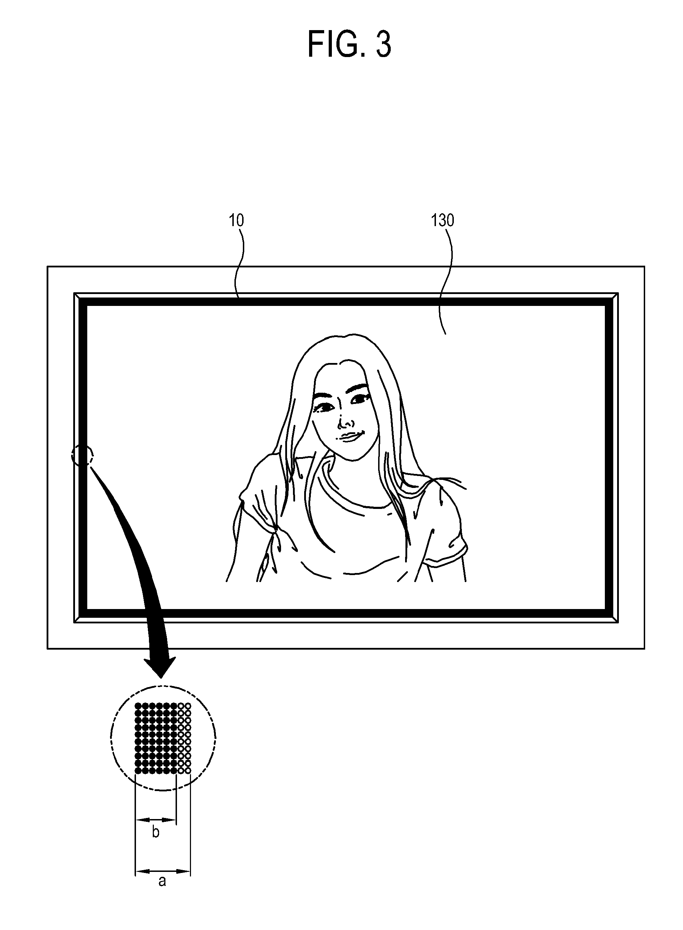

The OSD calculator 162 may calculate OSD data for an OSD having a width corresponding or equivalent to the maximum pixel width of pixels in the distortion region and compensate some of the pixel values included in the distortion region. For example, referring to FIG. 2, the OSD calculator 162 calculates OSD data for an OSD having a width corresponding to or equivalent to a maximum value b for the pixels of the distortion region included in the region 10 adjacent to the external circumference of the image displayable on the display unit 130, and generate compensation data with the calculated OSD data based on the peripheral colour (e.g., a pixel value most adjacent to the calculated OSD) of the OSD. That is, as shown in FIG. 3, the calculated compensation data may include OSD data having a number of pixels b from the external circumference of the image signal to the inside of the image signal. The number of pixels b may be predetermined in an exemplary embodiment. While FIG. 2 show the black distortion region (with the maximum width of b), FIG. 3 shows the OSD (with a uniform width of b) having a colour based on the peripheral colour.

The OSD data is used to generate an OSD by the OSD generator 121 and the generated OSD is output to the display unit 130 after the distortion region is replaced by the OSD. The OSD may include a box having a width corresponding to a number of pixels along the external circumference of the image. In an exemplary embodiment, the width and the number of pixels may be predetermined. According to an exemplary embodiment of the present invention, the width of the OSD corresponds to the maximum value b (the largest pixel width) among the pixels in the distortion region.

That is, the pixel value of the pixels included in the distortion region of the image displayed on the display unit 130 is replaced by the OSD data, which is a very small amount. Thus, a user may hardly recognize the change due to the compensation data from the screen.

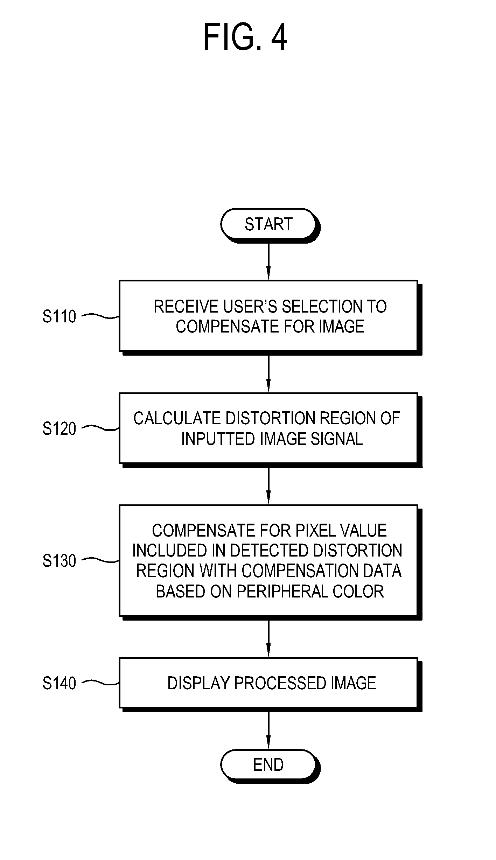

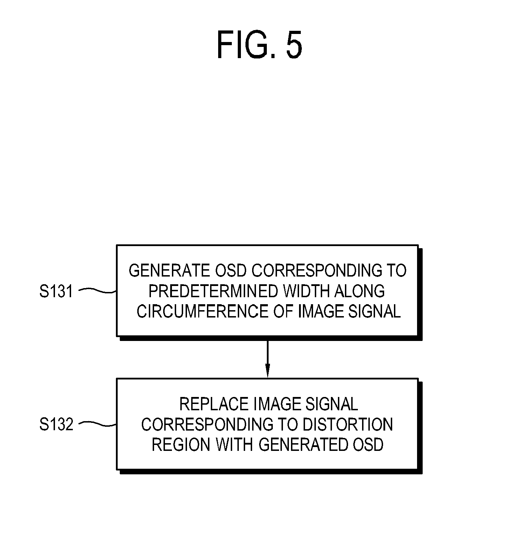

Hereinafter, a control method of the image processing apparatus 100 according to the present invention will be described with reference to FIGS. 4 and 5.
As shown in FIG. 4, the image processing apparatus 100 may receive a user's selection to compensate for the distortion region (S110).

The controller 160 detects the distortion region of the image signal input from the outside (S120). The controller 160 detects the brightness of each pixel of the image signal and determines that the pixel corresponding to black is the distortion region.

The controller 160 compensates for at least a part of the distortion region detected at operation S120 based on the peripheral colour (S130).

More specifically, referring to FIG. 5, the controller 160 may generate an OSD having a width corresponding to or equivalent to the maximum pixel width among the pixels included in the distortion region along the external circumference of the image signal (S131). The controller 160 may replace the image corresponding to the distortion region with the OSD (S132).

As shown in FIG. 4, the controller 160 displays the compensated image at operation S130, on the display unit 130 (S140).

As described above, an image processing apparatus and a control method thereof according to the present invention compensates for a distortion region at an external circumference of an image generated by Justscan scanning and provides a clear image in high resolution.

Although a few exemplary embodiments of the present invention have been shown and described, it will be appreciated by those skilled in the art that changes may be made in these exemplary embodiments without departing from the principles of the invention, the scope of which is defined in the appended claims.

## Claims

1. An image processing apparatus, comprising:
an image processor for processing an input image that is to be displayed without changing a resolution of the input image; and
a controller for detecting a distortion region of the input image and controlling the image processor to compensate for at least a part of the detected distortion region based on a peripheral colour.

2. The image processing apparatus according to claim 1, wherein a width of the distortion region comprises a predetermined number of pixels from an external periphery of the input image towards an inside of the input image.

3. The image processing apparatus according to claim 1 or 2, wherein the controller determines that a pixel of the input image is in the distortion region if the pixel of the input image is black.

4. The image processing apparatus according to any one of the preceding claims, wherein the image processor further comprises an on screen display (OSD) generator to generate an OSD having a width corresponding to a predetermined number of pixels along an external periphery of the input image, and the controller is arranged to control the OSD generator to replace the distortion region with the OSD.

5. The image processing apparatus according to claim 4, wherein the predetermined number of pixels along the external periphery is a maximum value of the pixels in the distortion region.

6. The image processing apparatus according to any one of the preceding claims, further comprising a display unit for displaying the input image.

7. The image processing apparatus according to any one of the preceding claims, further comprising a user input unit for receiving a user command, wherein
the controller is arranged to control the image processor to selectively compensate for the distortion region according to the user command input through the user input unit.

8. A method of controlling an image processing apparatus which displays an input image without changing a resolution of the input image, the method comprising:
detecting a distortion region of the input image; and
compensating for at least a part of the detected distortion region based on a peripheral colour.

9. The method according to claim 8, wherein a width of the distortion region comprises a predetermined number of pixels from an external periphery of the input image to an inside of the input image.

10. The method according to claim 8 or 9, wherein detecting the distortion region comprises determining that a pixel of the input image is included in the distortion region if the pixel of the input image is black.

11. The method according to claim 8, 9 or 10, further comprising generating an on screen display (OSD) having a width corresponding to a predetermined number of pixels along an external periphery of the input image, wherein compensating for the at least a part of the distortion region comprises replacing the distortion region with the OSD.

12. The method according to claim 11, wherein the predetermined number of pixels along the external periphery is a maximum value of the pixels in the distortion region.

13. The method according to any one of claims 8 to 12, further comprising displaying the input image.

14. The method according to any one of claims 8 to 13, further comprising receiving a user command, wherein
compensating for the at least a part of the distortion region comprises selectively compensating for the at least a part of the distortion region according to the input user command.

15. A method of improving a display of an input image, the method comprising:
detecting a distortion region of the input image; and
replacing the detected distortion region of the input image with an on screen display (OSD).
